## Europäisches Patentamt
## European Patent Office
## Office européen des brevets

(19)

(11) Veröffentlichungsnummer: **0 050 257**
**A1**

(12)

# EUROPÄISCHE PATENTANMELDUNG

(21) Anmeldenummer: **81107908.6**

(22) Anmeldetag: **05.10.81**

(51) Int. Cl.³: **F 02 F 3/02, F 16 J 1/02**

(30) Priorität: **17.10.80 DE 3039221**

(43) Veröffentlichungstag der Anmeldung: **28.04.82**
**Patentblatt 82/17**

(84) Benannte Vertragsstaaten: **DE FR GB IT**

(71) Anmelder: **MAHLE GMBH, Patentabteilung Pragstrasse 26-46, D-7000 Stuttgart 50 (DE)**

(72) Erfinder: **Pfeiffenberger, Horst, Dahlienweg 8, D-7012 Fellbach (DE)**

(74) Vertreter: **Pfusch, Volker, Dipl.-Ing., MAHLE GMBH, Patentabteilung Pragstrasse 26-46, D-7000 Stuttgart 50 (DE)**

(54) Leichter Tauchkolben für Verbrennungsmotoren.

(57) Bei einem Tauchkolben für Verbrennungsmotoren mit Aussparungen in den Druck- und Gegendruckbereichen des Kolbenschaftes wird zur Gewichtsverminderung und Erniedrigung der Reibung am Kolbenschaft die Fläche der Aussparung (1) in der tragenden Schaftfläche auf der Druckseite kleiner als die Aussparung (2) in der tragenden Schaftfläche auf der Gegendruckseite ausgebildet.

EP 0 050 257 A1

0050257

Leichter Tauchkolben für Verbrennungsmotoren

Die Erfindung betrifft einen leichten Tauchkolben für Verbrennungsmotoren nach dem Oberbegriff des Anspruchs 1.

Der Erfindung liegt die Aufgabe zugrunde, einen möglichst leichten Kolben für schnellaufende Verbrennungsmotoren zur Verfügung zu stellen. Dabei wird von einem Kolben ausgegangen, dessen Bolzennaben im Schaft des Kolbens eingeformt sind. Wie bekannt, werden die Bolzennaben dabei so ausgebildet, daß sie in Bolzenlänge möglichst geringe Tragbreite aufweisen und der Abstand zwischen den gegenüberliegenden Bolzennaben ebenfalls möglichst gering ist. Bei sogenannten Vollschaftkolben führt dies dazu, daß die Bolzennaben in sogenannten geschlossenen Fenstern in das Kolbeninnere hinein ragen. Eine andere Form ist die Ausbildung des Kolbens als sogenannter Kastenkolben, bei dem der Kolben an den Bolzenenden axial über die gesamte Schafthöhe oder einen Teilbereich der Schafthöhe abgeflacht ist. Die Einformung der Bolzennaben kann in Richtung zur Druckseite des Kolbens und der gegenüberliegenden Gegendruckrichtung unterschiedlich sein. Eine jüngere Zusammenstellung dieser im einzelnen an sich bereits bekannten Ausführungsformen zeigt die DE-OS 28 41 980.

4.8.80
EP-PF/FL

Zusätzliche Gewichtserleichterungen hat man bereits versucht, durch auch in den tragenden Schaftbereichen gelegene Aussparungen zu erreichen. Beispiele hierzu zeigt die DE-OS 14 50 320.

Üblicherweise wird ein einteiliger Kolben im Bereich seines Schaftes im Zylinder des Motors geführt, während in der Ringpartie die Kolbenringe für die erforderliche Abdichtung zwischen Brennkammer und Kurbelraum sorgen. Bei Kolben, die im Schaftbereich unterhalb des Kolbenkopfes im Bereich der Tragflächen derart große radiale Aussparungen aufweisen, daß sich die tragenden Schaftflächen nur noch unterhalb der Bolzenachse befinden, muß die Ringpartie des Kolbenkopfes mit zur Kolbenführung herangezogen werden. In bezug auf Sicherheit gegen Kolbenkippen ist diese Art der Kolbenführung äußerst vorteilhaft. Für die Bemessung der Größe der radialen Aussparungen im Bereich der tragenden Schaftflächen ist die zur Kraftaufnahme aus Festigkeitsgründen mindestens erforderliche tragende Schaftfläche ausschlaggebend. Dabei ist die auf der Kolbendruckseite maximal auftretende Kraft für die Auslegung maßgebend. Hiervon ausgehend wurde bisher sowohl die Aussparungsfläche auf der Druck- als auch auf der Gegendruckseite des Kolbens festgelegt. Nicht berücksichtigt wurde dabei, daß durch gleiche Aussparungsgrößen auf Druck- und Gegendruckseite der Kolben auf der Gegendruckseite überdimensioniert ist. Hier Abhilfe zu schaffen, ist die Aufgabe der vorliegenden Erfindung.

Gelöst wird diese Aufgabe durch eine Kolbenschaftausführung nach den kennzeichnenden Merkmalen des Anspruchs 1.

Zweckmäßige Ausgestaltungen dieser erfindungsgemäßen Lehre zeigen die Unteransprüche.

Ausführungsbeispiele der Erfindung sind in der Zeichnung dargestellt. Es zeigen:

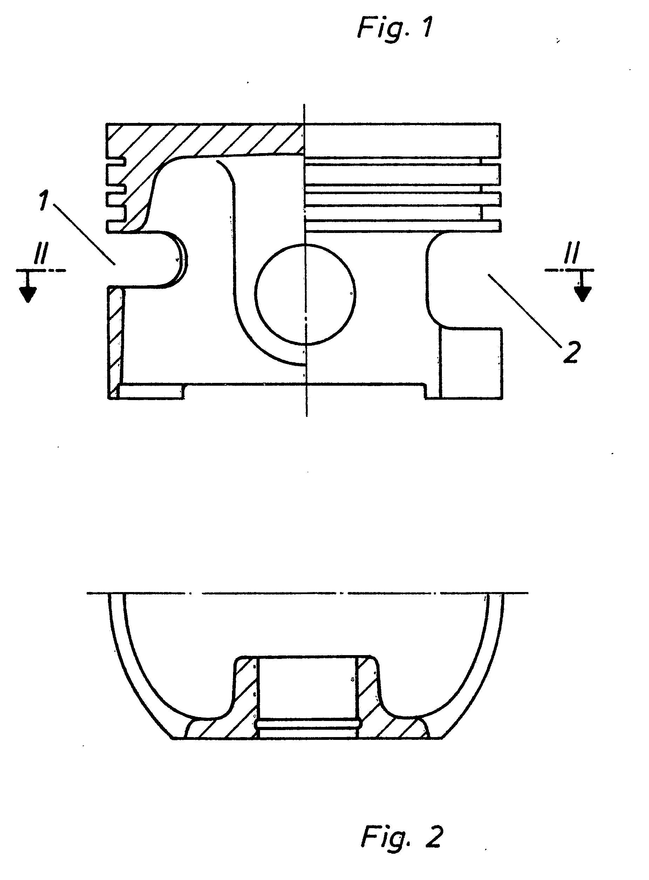

Fig. 1 einen sogenannten Kastenkolben und zwar im linken

0050257

Teil im Längsschnitt und im rechten Teil in der
Ansicht

Fig. 2 den Kastenkolben nach Fig.1 im Schnitt nach Linie
II-II

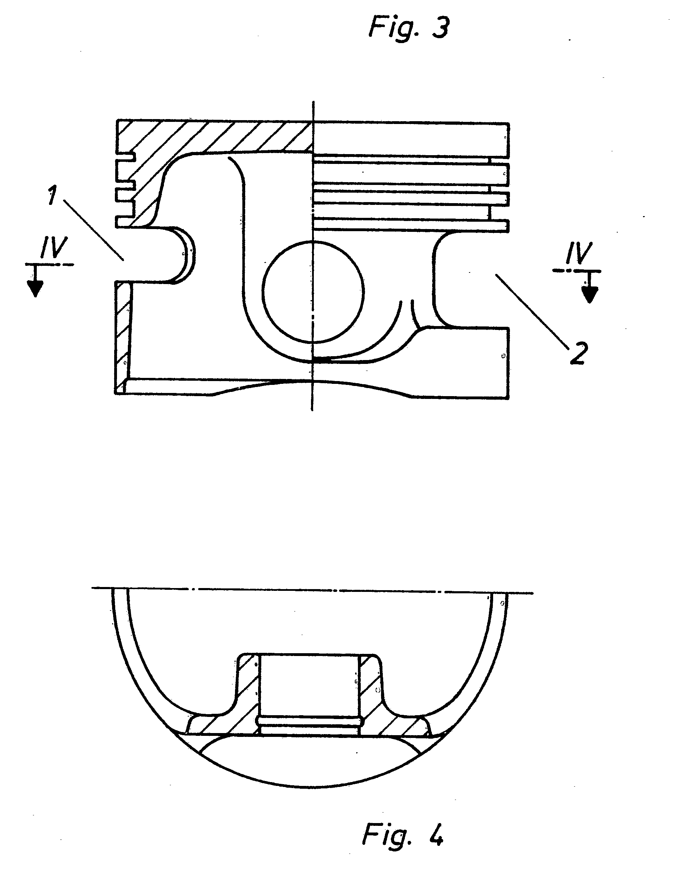

Fig. 3 einen Kolben mit in sogenannten Fenstern angeordneten aus der Kolbenschaftfläche nach innen zurückspringenden Bolzennaben und zwar im linken Teil
wiederum im Längsschnitt und im rechten Teil in der
Ansicht

Fig. 4 den Kolben nach Fig. 3 im Schnitt nach der Linie
IV-IV.

In dem Kolben liegen die radiale Aussparung 1 jeweils auf
der Kolbendruckseite und die Aussparung 2 jeweils auf der
Kolbengegendruckseite. Umfangsmäßig erstrecken sich die
Aussparungen symmetrisch zur Kolbenkippachse jeweils etwa
um 100°.

- 1 -

0050257

A n s p r ü c h e

1. Leichter Tauchkolben für Verbrennungsmotoren mit einem die Kolbenringnuten aufnehmenden Kopfteil, einem vom Kopf ausgehenden Schaft mit darin eingeformten Bolzennaben geringer Tragbreite und geringem gegenseitigen Abstand und radialen Aussparungen auf den Tragflächen ausgehend vom Kolbenkopf und Führung des Kolbens im Bereich der Ringpartie und am Schaftende unterhalb der Bolzenachse, dadurch g e k e n n z e i c h n e t , daß die Fläche der radialen Aussparungen (1,2) in den tragenden Schaftflächen auf der Druckseite des Kolbens kleiner als auf der Gegendruckseite ist.

2. Kolben nach Anspruch 1 dadurch g e k e n n z e i c h - n e t , daß die radiale Aussparung (2) sich auf der Gegendruckseite vom Kolbenkopf aus gesehen axial über die Bolzenachse erstreckt,während die Aussparung (1) auf der Druckseite oberhalb der Bolzenachse endet.

3. Kolben nach Anspruch 1 oder 2, dadurch g e k e n n - z e i c h n e t , daß im Tragflächenbereich des Kolbens auf der Gegendruckseite die Aussparung (2) im Vergleich zu den effektiv tragenden Schaftflächen den größeren Anteil aufweisen.
4.8.1980
EP-PF/FL
VKA 557EP

4. Kolben nach einem der vorhergehenden Ansprüche,
   dadurch g e k e n n z e i c h n e t, daß das Verhältnis der Flächen von radialen Aussparungen (2)
   zu effektiver Tragfläche des Schaftes auf der Gegendruckseite mehr als 60 zu 40 beträgt.

0050257

Fig. 1

Fig. 2

0050257

Fig. 3

Fig. 4

**Europäisches Patentamt**

**EUROPÄISCHER RECHERCHENBERICHT**

0050257

Nummer der Anmeldung

EP 81 10 7908

| Kategorie | EINSCHLÄGIGE DOKUMENTE | | KLASSIFIKATION DER ANMELDUNG (Int. Cl.³) |
|---|---|---|---|
| | Kennzeichnung des Dokuments mit Angabe, soweit erforderlich, der maßgeblichen Teile | betrifft Anspruch | |
| | EP - A - 0 009 269 (SCHMIDT)<br>* Figuren 1,2; Seite 4, Zeilen 13-30; Seite 7, Zeilen 11-24 * | 1 | F 02 F 3/02<br>F 16 J 1/02 |
| | -- | | |
| | GB - A - 302 605 (BOHN)<br>* Figur 1; Seite 2, Zeilen 7-24 * | 1 | |
| | -- | | |
| A | US - A - 3 765 307 (NEEL)<br>* Figur 3; Spalte 5, Zeilen 5-11 * | | **RECHERCHIERTE SACHGEBIETE (Int. Cl.³)**<br><br>F 02 F<br>F 16 J |
| | ---- | | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 21-01-1982 | VAN ARX |

EPA form 1503.1  06.78